# EUROPÄISCHE PATENTSCHRIFT

(11) **EP 2 592 361 B1**
(45) Veröffentlichungstag und Bekanntmachung des Hinweises auf die Patenterteilung: **04.01.2017**
(21) Anmeldenummer: 11188672.7
(22) Anmeldetag: 10.11.2011
(51) Int. Cl.: F24H 1/18, F24H 9/12

(54) **Speicherbehälter aus Kunststoff für ein fluides Medium**
Storage container made of plastic for a fluid medium
Récipient de stockage en matière synthétique pour un milieu fluidique

(43) Veröffentlichungstag der Anmeldung: 15.05.2013
(73) Patentinhaber: Roth Werke GmbH, 35232 Dautphetal (DE)
(72) Erfinder:
(74) Vertreter: Rohmann, Michael

(56) Entgegenhaltungen:
- EP-A1- 0 565 782
- EP-A1- 0 747 642
- AU-A1- 2005 299 240
- DE-A1-102005 010 204
- DE-U1-202009 016 414
- US-A- 4 191 304

## Beschreibung

Die Erfindung betrifft einen Speicherbehälter aus Kunststoff für ein fluides Medium, insbesondere für erwärmtes Heizungswasser oder erwärmtes Trinkwasser, und ein Verfahren zur Herstellung eines solchen Speicherbehälters aus Kunststoff.

Speicherbehälter, insbesondere drucklose Speicherbehälter für fluide Medien sind aus der Praxis grundsätzlich bekannt. Dabei hat es sich bewährt, Speicherbehälter aus Metall oder aus Kunststoff zu fertigen und in den Speicherbehälter einen Wärmetauscher einzubringen. Mit dem Wärmetauscher kann dann ein in dem Speicherbehälter vorrätig gehaltenes Wärmeträgermedium erwärmt werden. Nachteilig bei den aus der Praxis bekannten Wärmespeichern ist jedoch, dass sich diese teilweise nur unter erhöhtem Aufwand in Heizungssysteme bzw. Trinkwassersysteme integrieren lassen. Darüber hinaus ist die Festigkeit von den aus der Praxis bekannten Speicherbehältern nicht für jeden Einsatzzweck ausreichend.

Aus EP 0 565 782 A1 ist ein Warmwasserspeicherbehälter für Hauswasseranlagen bekannt. Der Speicherbehälter verfügt über einen aus Kunststoff gebildeten Innenbehälter, der mit mehreren Lagen eines zugfesten faserigen Materials umwickelt ist. Dieser Speicherbehälter weist jedoch den Nachteil auf, dass im Laufe der Zeit Sauerstoff in den Behälterinnenraum diffundiert und dann in dem in dem Behälter aufgenommenen warmen Wasser gelöst wird. Ist ein solcher Behälter in ein bestehendes Trinkwassersystem eingebunden, dessen Verrohrung und/oder Anschlussstücke aus einem oxidierbaren Metall besteht / bestehen, ist eine Beschädigung der vorhandenen Installationen aufgrund sauerstoffinduzierter Oxidation unvermeidbar.

Der Erfindung liegt das technische Problem zugrunde, einen Speicherbehälter der eingangs genannten Art anzugeben, der sich durch eine hervorragende Festigkeit und Stabilität auszeichnet, bei dem die vorstehend beschriebenen Probleme vermieden werden können und der insbesondere problemlos in Warmwassersysteme integrierbar ist.

Zur Lösung des technischen Problems lehrt die Erfindung einen Speicherbehälter aus Kunststoff für ein fluides Medium, insbesondere für erwärmtes Heizungswasser oder erwärmtes Trinkwasser, wobei mindestens eine Montageöffnung des Speicherbehälters mit einem Bauteil verschlossen ist, wobei das Bauteil als separates Bauteil ausgebildet und fluiddicht an den Speicherbehälter angeschlossen ist, wobei der Speicherbehälter eine Barriereschicht aufweist, welche Barriereschicht ein Diffundieren korrosiver Gase in den Innenraum des Speicherbehälters verhindert bzw. im Wesentlichen verhindert, wobei der Speicherbehälter zumindest teilweise außenseitig mit einem Faserverbundmaterial verstärkt bzw. umwickelt ist, wobei in einem Innenraum des Speicherbehälters eine Entnahmevorrichtung zum Einspeisen und/oder Entnehmen des fluiden Mediums angeordnet ist, wobei in dem Bauteil zumindest ein Anschlusselement angeordnet ist, an das die Entnahmevorrichtung derart angeschlossen ist, dass das fluide Medium in den Innenraum einbringbar bzw. aus dem Innenraum entnehmbar ist.

Gemäß einer bevorzugten Ausführungsform ist das Bauteil als Deckel für eine zu verschließende kopfseitige Montageöffnung des Speicherbehälters und/oder als Boden für eine zu verschließende fußseitige Montageöffnung des Speicherbehälters ausgebildet. Es liegt im Rahmen der Erfindung, dass der Speicherbehälter lediglich eine kopfseitige Montageöffnung und/oder lediglich eine fußseitige Montageöffnung aufweist, welche kopfseitige Montageöffnung mit dem Deckel und/oder welche fußseitige Montageöffnung mit dem Boden verschlossen ist.

Kopfseitig meint im Rahmen der Erfindung einen oberen Bereich des Speicherbehälters im aufgestellten Zustand, während fußseitig einen bodenseitigen bzw. unteren Bereich des Speicherbehälters bezeichnet.

Es liegt im Rahmen der Erfindung, dass die Wandung des Speicherbehälters und insbesondere also auch die Wandung des Deckels und des Bodens eine Wandstärke von 3 bis 5 mm und bevorzugt von 4 mm bzw. ungefähr 4 mm aufweist. Die Wandung des Speicherbehälters meint dabei die Wandung ohne aufgebrachte Schicht aus dem Faserverbundmaterial. Gemäß einer besonders bevorzugten Ausführungsform bestehen die Wandung des Speicherbehälters und insbesondere also auch die Wandung des Deckels und des Bodens vollständig bzw. im Wesentlichen vollständig aus Kunststoff. Vorteilhafterweise ist der Kunststoff ein thermoplastisches Polymer. Es empfiehlt sich, dass das thermoplastische Polymer ein Polyolefin und zweckmäßigerweise ein Polyethylen und/oder Polypropylen ist.

Gemäß einer Ausführungsform weist der Speicherbehälter einen zylinderförmig ausgebildeten Mittelabschnitt auf, der einen vorzugsweise kreisförmigen oder ovalen Querschnitt hat. Zweckmäßigerweise ist an den Mittelabschnitt vorzugsweise kopfseitig und/oder fußseitig jeweils eine bevorzugt kugelabschnittförmige Kappe vorteilhafterweise einstückig angeschlossen ist, in welcher kugelabschnittförmigen Kappe die Montageöffnung angeordnet ist. Gemäß einer Ausführungsform des Speicherbehälters sind der die kopfseitige Montageöffnung bedeckende Deckel sowie der die fußseitige Montageöffnung verschließende Boden mit zumindest einem Stützelement aneinander gekoppelt. Nach einer bevorzugten Ausführungsvariante weist der Speicherbehälter zumindest eine in Längsrichtung verlaufende Längssicke auf, wobei sich die Längssicke vorteilhafterweise über die vollständige axiale Länge des Mittelteils erstreckt. Zweckmäßigerweise endet die Längssicke in der kopfseitigen und fußseitigen Kappe. Axiale Länge meint eine Ausdehnung in Längsrichtung des vorzugsweise rotationssymmetrischen Speicherbehälters bzw. Mittelabschnitts. Es liegt im Rahmen der Erfindung, dass der Speicherbehälter als stehender Behälter ausgebildet ist. Die Längsachse des Speicherbehälters ist dann vorzugsweise senkrecht bzw. ungefähr senkrecht zu dem Aufstelluntergrund orientiert.

Erfindungsgemäß weist der Behälter eine Barriereschicht auf, welche Barriereschicht ein Diffundieren korrosiver Gase in den Innenraum des Speicherbehälters verhindert bzw. im Wesentlichen verhindert. Durch die Barriereschicht wird vorzugsweise verhindert, dass sich korrosive Gase in dem fluiden Medium anreichern können, wodurch an den Speicherbehälter angeschlossene Installationseinrichtungen bedingt durch das hohe, korrosive Potential des fluiden Mediums dann geschädigt werden können. Ein korrosives Gas ist beispielsweise Sauerstoff bzw. Luftsauerstoff. Es empfiehlt sich, dass die Barriereschicht zumindest bereichsweise zwischen dem Speicherbehälter und dem Faserverbundmaterial angeordnet ist. Vorteilhafterweise bedeckt das Faserverbundmaterial bzw. eine Schicht aus dem Faserverbundmaterial die Barriereschicht vollständig bzw. im Wesentlichen vollständig. Es liegt im Rahmen der Erfindung, dass die Barriereschicht unmittelbar auf dem Speicherbehälter aufliegt. Vorzugsweise ist das Faserverbundmaterial unmittelbar auf die Barriereschicht aufgewickelt.

Vorteilhafterweise ist die Barriereschicht zumindest eine Schicht aus der Gruppe "Metallschicht, Kunststoffschicht, Lackschicht". Als Kunststoffschicht kann bevorzugt eine Schicht aus Ethylenvinylalkohol (EVOH) eingesetzt werden. Bei der Lackschicht kann es sich um einen auf Acrylnitril basierenden Lack handeln. - Es liegt im Rahmen der Erfindung, dass die Barriereschicht den Speicherbehälter vollständig bzw. im Wesentlichen vollständig bedeckt und zweckmäßigerweise einen Zugang zu dem Anschlusselement ermöglicht.

Gemäß einer besonders bevorzugten Ausführungsform ist die Barriereschicht als Metallschicht ausgebildet. In einer vorteilhaften Ausführungsform ist die Metallschicht eine Aluminiumschicht. Es liegt im Rahmen der Erfindung, dass die Metallschicht von einer Metallfolie gebildet ist, die bevorzugt auf den Speicherbehälter aufgewickelt ist. Gemäß einer bevorzugten Ausführungsform liegt die Metallschicht ohne Zwischenschaltung einer weiteren Schicht oder weiterer Schichten formschlüssig auf dem Speicherbehälter auf. In einer alternativen Ausführungsform ist es möglich, dass die Metallschicht über eine Haftvermittlerschicht an den Speicherbehälter angeschlossen ist.

Es empfiehlt sich, dass die Metallschicht eine Dicke von 30 µm bis 140 µm aufweist. Vorzugsweise weist die Metallschicht im kopfseitigen Bereich bzw. im Bereich des Deckels und/oder im fußseitigen Bereich bzw. im Bereich des Bodens eine Dicke von 70 µm bis 130 µm, bevorzugt eine Dicke von 80 bis 120 µm, besonders bevorzugt eine Dicke von 90 bis 110 µm, und beispielsweise eine Dicke von 100 µm bzw. ungefähr 100 µm auf. Empfohlenermaßen hat die Metallschicht in dem Mittelabschnitt des Speicherbehälters eine Dicke von 30 µm bis 70 µm, bevorzugt 40 µm bis 60 µm und besonders bevorzugt von 50 µm bzw. von ungefähr 50 µm.

Gemäß einer vorteilhaften Ausführungsform weist die aus dem Faserverbundmaterial gebildete Schicht eine Dicke von 2 bis 10 mm und vorzugsweise eine Dicke von 3 bis 6 mm, beispielsweise eine Dicke von 4 mm bzw. ungefähr 4 mm auf.

Es liegt im Rahmen der Erfindung, dass das Faserverbundmaterial zumindest 10 bis 50 Gew.-% eines thermoplastischen Kunststoffes und vorzugsweise 50 bis 90 Gew.-% einer Faserart enthält. Gemäß einer bevorzugten Ausführungsform ist der thermoplastische Kunststoff ein Polyolefin, empfohlenermaßen ein Polyethylen und/oder Polypropylen. Es liegt im Rahmen der Erfindung, dass das Faserverbundmaterial 15 bis 45 Gew.-%, vorzugsweise 20 bis 40 Gew.-%, bevorzugt 25 bis 35 Gew.-% und besonders bevorzugt 30 Gew.-% bzw. ungefähr 30 Gew.-% des thermoplastischen Kunststoffes enthält. Es empfiehlt sich, dass das Faserverbundmaterial 55 bis 85 Gew.-%, zweckmäßigerweise 60 bis 80 Gew.-%, vorzugsweise 65 bis 75 Gew.-% und besonders bevorzugt 70 bzw. ungefähr 70 Gew.-% der zumindest einen Faserart enthält. Die Faserart ist vorteilhafterweise ausgewählt aus der Gruppe "Glasfasern, Kohlenstofffasern, Aramidfasern, Kunststofffasern, Metallfasern". Der Einsatz von Glasfasern hat sich im Rahmen der Erfindung besonders bewährt. Gemäß einer bevorzugten Ausführungsform liegt die Faserverbundmaterialschicht unmittelbar und empfohlenermaßen formschlüssig an der Barriereschicht an. Es liegt im Rahmen der Erfindung, dass zwischen der Faserverbundmaterialschicht und der Barriereschicht keine weitere Schicht vorhanden ist und insbesondere keine Klebeschicht bzw. Haftvermittlerschicht vorhanden ist. Auf diese Weise wird ein einfaches Trennen der Faserverbundmaterialschicht von der Barriereschicht gewährleistet, wodurch die Wiederverwertbarkeit eines erfindungsgemäßen Speicherbehälters verbessert und vereinfacht wird. Die Umwicklung des Speicherbehälters mit dem Faserverbundmaterial gewährleistet eine Beständigkeit des Speicherbehälters bei einem Betriebsdruck von beispielsweise 3 bar bzw. ungefähr 3 bar. - Nach bevorzugter Ausführungsform der Erfindung ist der Speicherbehälter bzw. ist die Oberfläche des Speicherbehälters zu mindestens 90 % und bevorzugt vollständig bzw. im Wesentlichen vollständig von der Faserverbundmaterialschicht bedeckt.

Vorteilhafterweise ist der Speicherbehälter durch zumindest ein Bandagenelement stabilisiert. Vorzugsweise umläuft das Bandagenelement den Mittelabschnitt des Speicherbehälters vollständig. Gemäß einer Ausführungsform ist das Bandagenelement aus einem Kunststoff oder aus einem Metall ausgebildet. Zweckmäßigerweise ist der Kunststoff des Bandagenelementes ein Polyolefin, vorzugsweise ein Polyethylen und/oder Polypropylen. Besonders bevorzugt ist das Bandagenelement von einem Faserverbundmaterial gebildet, dass mit dem auf den Speicherbehälter aufgewickelten Faserverbundmaterial identisch ist. Es empfiehlt sich, dass das Bandagenelement auf die Faserverbundmaterialschicht aufgebracht ist. Vorzugsweise ist das aus dem Faserverbundmaterial bestehende Bandagenelement mit der Faserverbundmaterialschicht verbunden. Grundsätzlich ist es möglich, dass das Bandagenelement zwischen dem Speicherbehälter und der Faserverbundmaterialschicht angeordnet ist. Gemäß einer bevorzugten Ausführungsform weist der Speicherbehälter vorzugsweise im Bereich des Mittelabschnitts zumindest eine den Speicherbehälter umlaufende Verstärkungssicke auf. Besonders bevorzugt ist ein Bandagenelement in einer Verstärkungssicke angeordnet. Empfohlenermaßen ist das Bandagenelement parallel und/oder quer zur Längsrichtung des Speicherbehälters angeordnet.

In einer weiteren Ausführungsform ist auf den Speicherbehälter eine Verstärkungsschale aufgebracht. Vorzugsweise ist der Speicherbehälter vollständig bzw. im Wesentlichen vollständig von der Verstärkungsschale umgeben. Gemäß einer Ausführungsform ist die Verstärkungsschale aus einem hochfesten, thermoplastischen Kunststoff, beispielsweise aus einem Polycarbonat gefertigt. Es liegt im Rahmen der Erfindung, dass die Verstärkungsschale vorteilhafterweise zweiteilig ausgebildet ist und gemäß einer Ausführungsform durch Tiefziehen hergestellt ist.

Gemäß einer bevorzugten Ausführungsform ist der Deckel und/oder der Boden mit dem Behältermantel verschraubt und/oder vorzugsweise verschweißt. Zweckmäßigerweise weist der Deckel und/oder der Boden einen kreisrunden Querschnitt auf. Es empfiehlt sich, dass der Deckel und/oder der Boden kuppelhaubenförmig bzw. kalottenförmig ausgebildet ist. Die den Deckel erläuternden Ausführungen betreffen im Rahmen der Erfindung auch den Boden. Es ist möglich, dass der Deckel und der Boden identisch bzw. im Wesentlichen identisch ausgebildet sind.

Vorteilhafterweise weist der Deckel zumindest eine und bevorzugt mehrere Verstärkungsrippen auf. Gemäß einer bewährten Ausführungsform ist an der Innenseite bzw. an der innenraumseitigen Oberfläche des Deckels zumindest eine vorzugsweise kreisförmige Verstärkungsrippe angeordnet. Es empfiehlt sich, dass an der Innenseite des Deckels zumindest zwei, vorzugsweise zumindest drei und bevorzugt zumindest vier konzentrisch zueinander angeordnete, kreisförmige Verstärkungsrippen angeordnet sind. Es liegt im Rahmen der Erfindung, dass an der Innenseite des Deckels zumindest eine geradlinige Verstärkungsrippe vorgesehen ist, die sich radial von einem Mittelpunkt des vorzugsweise kreisförmigen Deckels weg erstreckt. Gemäß einer bevorzugten Ausführungsform ist an der Innenseite des Deckels eine Vielzahl geradliniger Verstärkungsrippen vorgesehen, die sich sternförmig vom Mittelpunkt des Deckels radial nach außen erstrecken. Es liegt im Rahmen der Erfindung, dass der Winkel zwischen zwei geradlinigen Verstärkungsrippen zwischen 15° und 180°, vorzugsweise zwischen 20° und 120° und bevorzugt zwischen 30° und 90° liegt. In einer besonders bevorzugten Ausführungsform beträgt der Winkel zwischen zwei geradlinigen Verstärkungsrippen 30° bzw. ungefähr 30°. Es empfiehlt sich, dass an der Innenseite des Deckels drei bis fünfzehn geradlinige Verstärkungsrippen angeordnet sind und vorzugsweise sechs bis zwölf geradlinige Verstärkungsrippen vorgesehen sind.

Die axiale Länge der Verstärkungsrippen ist zweckmäßigerweise derart ausgebildet, dass behälterinnenraumseitige Stirnflächen der Verstärkungsrippen miteinander fluchten bzw. in einer quer zur Längsachse des Behältermantels orientierten Ebene liegen. Empfohlenermaßen bildet eine behältermantelseitige Oberfläche einer randseitigen, kreisförmigen Verstärkungsrippe des Deckels eine Dichtfläche aus, die im montierten Zustand des Deckels an dem Behältermantel anliegt. Vorteilhafterweise beträgt die axiale Länge der Dichtfläche ungefähr 0,5 cm bis 2 cm und in einer vorteilhaften Ausführungsform ungefähr 1 cm. In einer bevorzugten Ausführungsform weist der Deckel eine ringförmige Auflagefläche auf, mit der der Deckel auf dem Behältermantel aufliegt, wenn die Dichtfläche der kreisförmigen Verstärkungsrippe innenraumseitig an dem Behältermantel anliegt.

Es hat sich als zweckmäßig herausgestellt, dass der Deckel und/oder der Boden mit einem Fixierungsmittel ausgestattet ist, mit dem ein Stützelement an den Deckel und/oder Boden angeschlossen ist. Zweckmäßigerweise sind der Deckel und der Boden unmittelbar mit dem Stützelement aneinandergekoppelt. Gemäß einer vorteilhaften Ausführungsform sind an dem Deckel und/oder dem Boden zwei, vorzugsweise drei und besonders bevorzugt vier Fixierungsmittel angeordnet. Es empfiehlt sich, dass das Fixierungsmittel als zylindrische Anschlusshülse ausgebildet ist, in die das Stützelement vorzugsweise kraftschlüssig eingefügt ist. Gemäß einer Ausführungsform sind der Deckel und der Boden mit zwei, zweckmäßigerweise drei und vorteilhafterweise vier Stützelementen aneinander gekoppelt. Besonders bevorzugt ist das Fixierungsmittel in eine vorzugsweise kreisförmige Verstärkungsrippe integriert. Empfohlenermaßen überragt das Fixierungsmittel in Richtung des Behälterinnenraums die Verstärkungsrippe zweckmäßigerweise um 3 cm bis 5 cm und vorzugsweise um ungefähr 3,5 cm.

Es liegt im Rahmen der Erfindung, dass der Deckel und/oder der Boden auf ihrer Außenseite mit einer zylindrischen Erhebung ausgestattet ist, in welcher Erhebung das Anschlusselement angeordnet ist. Außenseite meint im Rahmen der Erfindung die Oberfläche des Deckels und/oder des Bodens, die dem Innenraum des Behälters abgewandt ist. Vorteilhafterweise ist die zylindrische Erhebung mittig bzw. zentriert auf der Außenseite des Deckels und/oder des Bodens angeordnet. Ein Anschlusselement ist bevorzugt als Gewindeeinsatz ausgebildet, welcher Gewindeeinsatz gemäß einer Ausführungsform deckelseitig gerändelt ist, wodurch ein Verdrehen des Gewindeeinsatzes relativ zu dem Deckel ausgeschlossen wird. Es hat sich bewährt, dass der Gewindeeinsatz aus einem Metall und vorzugsweise aus Edelstahl gefertigt ist. Nach einer anderen Ausführungsform ist der Gewindeeinsatz aus einem Kunststoff gefertigt. Es liegt im Rahmen der Erfindung, dass ein vorzugsweise als integraler Bestandteil des Deckels bzw. Bodens ausgebildeter Rohrabschnitt das Entnahmeelement bildet, welcher Rohrabschnitt in fluidleitender Verbindung zu dem Anschlusselement angeordnet ist. Besonders bevorzugt sind in der deckelseitigen und/oder bodenseitigen Erhebung jeweils zwei Anschlusselemente bzw. Anschlusspunkte vorhanden. Gemäß einer Ausführungsform dient ein erster Anschlusspunkt als Zuführelement und ein zweiter Anschlusspunkt als Entnahmeelement.

Zweckmäßigerweise ist der Innenraum des Speicherbehälters in einem Betriebszustand vollständig bzw. im Wesentlichen vollständig mit dem fluiden Medium gefüllt. Gemäß einer vorteilhaften Ausführungsform weist das in dem Speicherbehälter bevorratete fluide Medium eine Temperatur von 25 °C bis 35 °C und in einer anderen Ausführungsform eine Temperatur von ungefähr 50 °C bis 90 °C auf. Bevorzugt weist das fluide Medium in dem Speicherbehälter eine Temperatur von maximal 80 °C bzw. ungefähr 80 °C auf. Es empfiehlt sich, dass das fluide Medium bei einem Druck von 1 bar bis 4 bar und vorzugsweise von ungefähr 3 bar in dem Speicherbehälter bevorratet wird. Es liegt im Rahmen der Erfindung, dass der Speicherbehälter einen Innenraum mit einem Volumen von zumindest 80 Litern, zweckmäßigerweise von mehr als 300 Litern, vorteilhafterweise mehr als 500 Litern und empfohlenermaßen mehr als 1000 Litern aufweist. Vorzugsweise wird ein erfindungsgemäßer Speicherbehälter als druckfester Speicher eingesetzt.

Vorteilhafterweise weist die Entnahmevorrichtung Öffnungen auf, durch die dem Innenraum des Speicherbehälters fluides Medium zuführbar oder entnehmbar ist. Im Rahmen der Erfindung sind mit dem Begriff Zuführöffnungen Öffnungen gemeint, durch die erwärmtes fluides Medium in den Innenraum gefördert wird. Öffnungen, durch die abgekühltes fluides Medium aus dem Innenraum gefördert wird, werden im Rahmen der Erfindung als Entnahmeöffnungen bezeichnet. Zweckmäßigerweise ist die Entnahmevorrichtung als Schichtladesystem mit der Maßgabe ausgebildet, dass in dem Innenraum des Speicherbehälters ein Temperaturgradient vom fußseitigen zum kopfseitigen Ende einstellbar ist, wobei das am kopfseitigen Ende bevorratete fluide Medium eine höhere Temperatur als das am fußseitigen Ende bevorratete fluide Medium aufweist. Da das kältere, fluide Medium eine höhere, spezifische Dichte als das wärmere bzw. erwärmte, fluide Medium aufweist, sinkt kälteres, fluides Medium in einen Fußbereich des Speicherbehälters, während das wärmere bzw. erwärmte fluide Medium in einen Kopfbereich des Speicherbehälters aufsteigt. Vorteilhafterweise ist mit der Entnahmevorrichtung eine Entnahme des eine bestimmte, vorgegebene Temperatur aufweisenden fluiden Mediums möglich. Bevorzugt weisen der Deckel und der Boden jeweils ein Anschlusselement auf, an welche Anschlusselemente vorzugsweise die Entnahmevorrichtung angeschlossen ist. Gemäß einer bevorzugten Ausführungsform ist in dem Innenraum des Speicherbehälters ein Warmwasserwärmetauscher vorzugsweise zum Erwärmen von Trinkwasser angeordnet, wobei der Warmwasserwärmetauscher zweckmäßigerweise durch das Stützelement gehalten wird. Der Warmwasserwärmetauscher ist vorteilhafterweise als wendeiförmiges Rohr und bevorzugt als wendeiförmiges Edelstahlrohr ausgebildet. Empfohlenermaßen wird das durch den Warmwasserwärmetauscher geleitete Trinkwasser im Durchlaufprinzip erwärmt. Es liegt im Rahmen der Erfindung, dass durch den Warmwasserwärmetauscher Wärme aus dem Speicherbehälter entnommen wird. Vorteilhafterweise ist der Warmwasserwärmetauscher im Kopfbereich des Speicherbehälters angeordnet. Es ist möglich, dass sich der Warmwasserwärmetauscher über die vollständige axiale Länge bzw. im Wesentlichen über die vollständige axiale Länge des Speicherbehälters in dem Innenraum erstreckt.

Es liegt im Rahmen der Erfindung, dass in dem Innenraum des Speicherbehälters ein Unterstützungswärmetauscher (Heizungswärmetauscher) angeordnet ist, durch den Wärme auf das in dem Innenraum befindliche fluide Medium übertragbar ist. Vorteilhafterweise ist der Unterstützungswärmetauscher in einen separaten Wärmekreislauf eingebunden, in dem ein Wärmträgermedium zirkuliert, das von dem in dem Wärmespeicher bevorrateten fluiden Medium verschieden ist. Das Wärmeträgermedium, das dem Unterstützungswärmetauscher zugeführt wird, wird beispielsweise durch einen Solarkollektor erwärmt. Zweckmäßigerweise ist der Unterstützungswärmetauscher im Fußbereich des Innenraums in dem Speicherbehälter angeordnet. Es hat sich bewährt, dass der Unterstützungswärmetauscher als wendeiförmiges Rohr bzw. wendeiförmiges Edelstahlrohr ausgebildet ist. Besonders bevorzugt ist der Warmwasserwärmetauscher und/oder der Unterstützungswärmetauscher von einem Edelstahlwellrohr gebildet.

Vorteilhafterweise weisen der Deckel und/oder der Boden eine und bevorzugt zwei Durchgangsbohrungen auf, durch welche Durchgangsbohrungen zweckmäßigerweise ein Vorlauf und/oder Rücklauf des im Innenraum angeordneten Warmwasserwärmetauschers und/oder Unterstützungswärmetauschers führbar sind. Vorzugsweise sind zwei Durchgangsbohrungen diametral gegenüberliegend in dem Deckel angeordnet. Gemäß einer besonders bevorzugten Ausführungsform weist der Deckel abgesehen von dem Anschlusselement lediglich zwei Durchgangsbohrungen auf. Auf der Außenseite des Deckels ist die Durchgangsbohrung zweckmäßigerweise von einem zylinderförmigen Anschlussstutzen umgeben. Die axiale Länge des Anschlussstutzens ist dabei mit der Maßgabe bemessen, dass der Anschlussstutzen und die zylindrische Erhebung miteinander fluchten. Gemäß einer Ausführungsform ist durch eine erste Durchgangsbohrung in dem Deckel ein Vorlauf für den Warmwasserwärmetauscher und durch eine zweite Durchgangsbohrung ein Rücklauf des Warmwasserwärmetauschers in den Innenraum geführt. Es liegt im Rahmen der Erfindung, dass durch eine erste Durchgangsbohrung in dem Boden ein Vorlauf für den Unterstützungswärmetauscher und durch eine zweite Durchgangsbohrung im Boden ein Rücklauf des Unterstützungswärmetauschers geführt ist.

Auf der Innenseite des Deckels mündet die Durchgangsbohrung empfohlenermaßen in einen zylinderförmigen Abschnitt, wobei der zylinderförmige Abschnitt zweckmäßigerweise eine axiale Länge aufweist, so dass die Verstärkungsrippen innenraumseitig mit einer Stirnfläche des zylinderförmigen Abschnitts fluchten. Gemäß einer besonders bevorzugten Ausführungsform ist der zylinderförmige Abschnitt zwischen zwei konzentrischen, ringförmigen Verstärkungsrippen angeordnet und einstückig an die Verstärkungsrippen angeschlossen.

Empfohlenermaßen ist die Entnahmevorrichtung doppelrohrförmig ausgebildet und an das deckelseitige und bodenseitige Anschlusselement angeschlossen. Vorteilhafterweise weist der Deckel an der Innenseite ein zu einem Anschlussstutzen der Entnahmevorrichtung komplementäres Halteelement auf. Vorteilhafterweise ist die Entnahmevorrichtung in dem an den Deckel angeschlossenen Zustand mit zumindest einem und vorzugsweise zwei Strömungskanälen mit dem Anschlusselement verbunden.

Gemäß einer möglichen Ausführungsform weist die Entnahmevorrichtung ein deckelseitiges und ein bodenseitiges Entnahmesegment auf. Das deckelseitige bzw. obere Ende des bodenseitigen Entnahmesegments ist vorteilhafterweise beabstandet von dem bodenseitigen bzw. unteren Ende des deckelseitigen Entnahmesegments angeordnet. Es ist möglich, dass das deckelseitige Entnahmesegment und das bodenseitige Entnahmesegment mechanisch und besonders bevorzugt nicht fluidleitend aneinander gekoppelt sind. Da sich aufgrund der temperaturabhängigen spezifischen Dichte des fluiden Mediums ein Temperaturgradient vom Boden zum Deckel in dem Speicherbehälter ausbildet, kann durch eine gezielte Einstellung der axialen Länge des deckelseitigen Entnahmesegments die Temperaturen vorgegeben werden, bei welcher Temperatur das fluide Medium aus dem Speicherbehälter entnommen wird. In einer vorteilhaften Ausführungsform wird dem Speicherbehälter von einer Wärmequelle, beispielsweise einem Heizkessel, erwärmtes fluides Medium über das bodenseitige Entnahmesegment zugeführt, woraufhin das erwärmte fluide Medium durch das deckelseitige Entnahmesegment entnommen und bevorzugt einem Verbraucher, beispielsweise einer Heizungsanlage oder einem Trinkwassersystem zugeführt wird.

Gemäß einer weiteren Ausführungsform sind das deckelseitige und das bodenseitige Anschlusselement durch die Entnahmevorrichtung miteinander verbunden. Vorteilhafterweise ist der Speicherbehälter derart ausgebildet, dass die kopfseitigen bzw. deckelseitigen Anschlusselemente und die bodenseitigen bzw. fußseitigen Anschlusselemente in separate, von demselben fluiden Medium durchströmbare Wärmekreisläufe einbindbar sind. Grundsätzlich ist es möglich, dass durch den ersten Anschlusspunkt des bodenseitigen Anschlusselementes dem Innenraum beispielsweise von einem Heizkessel erwärmtes fluides Medium zugeführt wird. Durch den zweiten Anschlusspunkt des bodenseitigen Anschlusselementes wird bei dieser Ausführungsform abgekühltes bzw. kaltes fluides Medium zu einer Wärmequelle, beispielsweise dem Heizkessel, zurückgeführt. An dem ersten Anschlusspunkt des deckelseitigen Anschlusselements ist erwärmtes fluides Medium entnehmbar und einem Verbraucher, beispielsweise einer Heizungsanlage oder einem Trinkwassersystem, zuführbar. Weiterhin ist es möglich, dass kaltes fluides Medium, beispielsweise nach der Wärmeabgabe durch eine Heizungsanlage oder kaltes Trinkwasser durch den zweiten Anschlusspunkt des deckelseitigen Anschlusselementes in den Innenraum strömt.

Es liegt im Rahmen der Erfindung, dass die Entnahmevorrichtung doppelrohrförmig ausgebildet ist. Die Entnahmevorrichtung verfügt über ein Mantelrohr, in dem ein Innenrohr angeordnet ist. Das Mantelrohr weist einen deckelseitigen Kopfabschnitt und einen bodenseitigen Fußabschnitt auf, in denen jeweils Entnahmeöffnungen oder Zuführöffnungen angeordnet sind. Es hat sich bewährt, dass der Kopfabschnitt und der Fußabschnitt strömungstechnisch voneinander getrennt sind. Das Innenrohr weist im Rahmen der Erfindung ein oberes, deckelseitiges Innenrohr und ein unteres, bodenseitiges Innenrohr auf. Der Kopfabschnitt ist vorteilhafterweise mit dem unteren Innenrohr verbunden und an eine bodenseitige Zulaufleitung für das erwärmte fluide Medium angeschlossen. Deckelseitig ist der Kopfabschnitt an eine Entnahmeleitung angeschlossen. Der Fußabschnitt ist mit dem oberen Innenrohr verbunden, welches Innenrohr an eine deckelseitige Zuführleitung für kaltes fluides Medium angeschlossen ist. Bodenseitig ist der Fußabschnitt mit einer Entnahmeleitung verbunden.

Es ist möglich, dass der Kopfabschnitt und der Fußabschnitt mit einem Mantelrohr eines doppelrohrförmigen Verbindungsabschnitts verbunden sind. Ein als Mantelrohr ausgebildetes Hüllrohr des Verbindungsabschnitts gemäß einer Ausführungsform ist strömungstechnisch vom Kopfabschnitt und vom Fußabschnitt getrennt.

Gemäß einer bevorzugten Ausführungsform ist eine innenliegende Zentralleitung des Verbindungsabschnitts an das obere Innenrohr sowie den Fußabschnitt angeschlossen, so dass durch die innenliegende Zentralleitung die deckelseitige Zuführleitung mit dem Fußabschnitt verbunden ist. Das Hüllrohr des Verbindungsabschnitts ist bevorzugt mit der bodenseitigen Zulaufleitung verbunden und weist vorzugsweise Zuführöffnungen auf, durch die das erwärmte, fluide Medium in den Innenraum des Speicherbehälters strömt.

Gemäß einer weiteren Ausführungsform ist der Verbindungsabschnitt mit einem Trennelement bzw. mit einer Barriere versehen. Der Kopfabschnitt ist vorteilhafterweise mit der kopfseitigen bzw. deckelseitigen Entnahmeleitung verbunden. An dem unteren bzw. bodenseitigen Ende des Kopfabschnitts ist vorzugsweise ein Koppelabschnitt angeordnet, in den das obere Innenrohr zweckmäßigerweise geführt ist. Das durch die Zuführleitung rückgeführte, kalte, fluide Medium strömt vorteilhafterweise durch das obere Innenrohr in den Koppelabschnitt, wo es vorzugsweise durch Öffnungen in den Innenraum des Speicherbehälters austritt. Dadurch, dass das kalte fluide Medium eine höhere Dichte als das warme fluide Medium aufweist, sinkt das kalte fluide Medium in dem Innenraum auf den Boden. An den Koppelabschnitt schließt der Verbindungsabschnitt an, wobei der Koppelabschnitt und der Verbindungsabschnitt strömungstechnisch voneinander getrennt sind. Dem Verbindungsabschnitt wird durch das untere Innenrohr von der bodenseitigen Zulaufleitung bzw. Zuführleitung erwärmtes fluides Medium zugeführt, das durch Öffnungen in dem Verbindungsabschnitt in den Innenraum des Speicherbehälters strömt. Vorteilhafterweise fließt durch Öffnungen in dem Fußabschnitt kaltes fluides Medium zu der bodenseitigen Entnahmeleitung, mit der das kalte fluide Medium zweckmäßigerweise zu einer Wärmequelle strömt.

In einer vorteilhaften Ausführungsform ist in dem Innenraum ein Leitmittel angeordnet, mit dem vorzugsweise vom Heizungswärmetauscher erwärmtes fluides Medium in Richtung der Entnahmeöffnungen der Entnahmevorrichtung, bevorzugt in Richtung der Entnahmeöffnungen in dem Kopfabschnitt gelenkt wird. Gemäß einer bewährten Ausführungsform ist das Leitmittel trichterförmig bzw. nach unten geöffnet ausgebildet, so dass empfohlenermaßen das erwärmte fluide Medium zu den Entnahmeöffnungen im Mantelrohr gelenkt wird. Das Leitmittel ist vorteilhafterweise als zentrierende Abdeckung des Heizungswärmetauschers ausgebildet.

Es liegt im Rahmen der Erfindung, dass die Entnahmevorrichtung Haltemittel für die Lagerung des Warmwasserwärmetauschers und/oder Heizungswärmetauschers aufweist. In einer bevorzugten Ausführungsform sind die Haltemittel (Haltestäbe) stabförmig ausgebildet und besonders bevorzugt aus Edelstahl gefertigt. Die Haltestäbe sind empfohlenermaßen mit einer ringförmigen Vorrichtung am Mantelrohr der Entnahmevorrichtung angebracht. Um die Entnahmevorrichtung herum sind vorzugsweise vier Haltestäbe angeordnet, wobei der Winkel zwischen zwei Haltestäben zweckmäßigerweise 90° bzw. ungefähr 90° beträgt. An den Haltestäben sind dann die mit Ausnehmungen versehenen Tragschienen angeschlossen. Gemäß einer bevorzugten Ausführungsform sind die Rohre des Warmwasserwärmetauschers und/oder des Heizungswärmetauschers in den Ausnehmungen der Tragschienen gelagert.

Weiterhin lehrt die Erfindung zur Lösung des technischen Problems ein Verfahren zur Herstellung eines Speicherbehälters, wobei ein Speicherbehälter bzw. ein Speicherbehälterrohling mit einer verschlossenen kopfseitigen Stirnseite und einer verschlossenen fußseitigen Stirnseite vorzugsweise durch Blasformen bereitgestellt wird, wobei in zumindest eine Stirnseite eine Montageöffnung eingebracht wird, wobei die Montageöffnung mit einem Bauteil verschlossen wird, wobei zumindest bereichsweise außenseitig auf dem Speicherbehälter eine Barriereschicht angeordnet wird, welche Barriereschicht ein Diffundieren korrosiver Gase in den Speicherbehälter verhindert bzw. im Wesentlichen verhindert, wobei der Speicherbehälter zumindest bereichsweise mit einem Faserverbundmaterial verstärkt bzw. umwickelt wird, wobei das Bauteil mit einem Anschlusselement ausgestattet wird und wobei an das Anschlusselement eine Entnahmevorrichtung zum Einbringen eines fluiden Mediums in einen Innenraum des Speicherbehälters und zum Entnehmen eines fluiden Mediums aus dem Innenraum des Speicherbehälters angeschlossen wird. Es ist möglich, dass der Speicherbehälter bzw. der Speicherbehälterrohling durch Spritzgießen oder Rotationsformen hergestellt wird.

Es ist möglich, dass die Montageöffnung in die kopfseitige oder die fußseitige Stirnseite eingebracht wird. Gemäß einer besonders bevorzugten Ausführungsform wird in die kopfseitige Stirnseite und/oder in die fußseitige Stirnseite jeweils vorzugsweise lediglich eine Montageöffnung eingebracht. Vorteilhafterweise wird die kopfseitige Montageöffnung mit einem Deckel und/oder die fußseitige Montageöffnung mit einem Boden verschlossen.

Es empfiehlt sich, dass zur Ausbildung einer Montageöffnung ein vorzugsweise kugelhaubenförmiges bzw. kalottenförmiges Segment aus der kopfseitigen Stirnseite und/oder der fußseitigen Stirnseite herausgetrennt wird. In einer besonders bevorzugten Ausführungsform wird/werden der Deckel und/oder der Boden zum Verschließen der Montageöffnung jeweils mit dem Speicherbehälter verschraubt und/oder verschweißt.

Erfindungsgemäß wird zumindest bereichsweise außenseitig auf dem Speicherbehälter eine Barriereschicht angeordnet, welche Barriereschicht ein Diffundieren korrosiver Gase in den Speicherbehälter verhindert bzw. im Wesentlichen verhindert. Das Faserverbundmaterial wird mit der Maßgabe auf den Speicherbehälter aufgewickelt, dass die Barriereschicht zwischen dem Speicherbehälter und dem Faserbundmaterial angeordnet ist.

Gemäß einer Ausführungsform ist die Barriereschicht eine Metallschicht, die vorzugsweise durch das Aufwickeln einer Metallfolie auf den Speicherbehälter gebildet wird. Besonders bevorzugt liegt die Metallschicht unmittelbar auf dem Speicherbehälter auf. Gemäß einer anderen Ausführungsform wird eine speicherbehälterseitige Oberfläche der Metallfolie vor dem Aufwickeln auf den Speicherbehälter mit einem Haftvermittler beschichtet, wodurch ein Anwickeln der Metallfolie an den Speicherbehälter begünstigt wird. Es liegt im Rahmen der Erfindung, dass nach dem Aufbringen der Barriereschicht auf den Speicherbehälter das Faserverbundmaterial auf den Speicherbehälter aufgewickelt wird. Das Faserverbundmaterial liegt besonders bevorzugt unmittelbar und empfohlenermaßen lediglich formschlüssig auf der Barriereschicht auf.

Der Erfindung liegt die Erkenntnis zugrunde, dass mit einem erfindungsgemäßen Speicherbehälter das Anlagenvolumen einer Vorrichtung zum Erwärmen eines fluiden Mediums erhöht werden kann. Wesentlich bei dem erfindungsgemäßen Speicherbehälter ist zudem die erfindungsgemäße Barriereschicht, mit der das Diffundieren von Sauerstoff in den Speicherbehälter zuverlässig unterdrückt bzw. zumindest vermindert wird. Auf diese Weise wird sichergestellt, dass in dem in dem Speicherbehälter vorrätig gehaltenen fluiden Medium lediglich eine geringe Konzentration gelösten Sauerstoffs anzutreffen ist, weswegen sich das fluide Medium dauerhaft durch ein vorteilhaft geringes Oxidationspotential auszeichnet. Es ist also nicht zu befürchten, dass durch das fluide Medium eine Beschädigung beispielsweise an der Heizungsanlage durch Korrosion zu befürchten ist. Durch das gesteigerte Anlagenvolumen und die dadurch vergrößerte Menge des fluiden Mediums wird der Betrag der gespeicherten Wärmeenergie erhöht. Der erfindungsgemäße Speicherbehälter eignet sich optimal für die Integration in Heizungsanlagen, die im Wesentlichen durch regenerative Wärmequellen gespeist werden. Regenerative Energiequellen, beispielsweise Sonnenenergiequellen, sind mit dem Nachteil behaftet, dass lediglich dann Energie gewonnen werden kann, wenn ausreichend Sonnenlicht zur Verfügung steht. Mit dem erfindungsgemäßen Speicherbehälter ist die Einlagerung von größeren Energiemengen möglich, so dass ausreichend Wärme zur Verfügung steht, wenn keine zusätzliche Wärmegewinnung aus regenerativen Energiequellen möglich ist. Mit anderen Worten ist die Nutzung der gespeicherten Wärme von der tatsächlichen Wärmeerzeugung abgekoppelt. Dadurch lässt sich das Einsatzspektrum von regenerativen Wärmesystemen problemlos ausweiten.

Weiterhin liegt der Erfindung die Erkenntnis zugrunde, dass sich ein erfindungsgemäßer Speicherbehälter durch ein auf das Speichervolumen bezogen sehr geringes Gewicht auszeichnet und infolgedessen problemlos handhabbar und montierbar ist. In besonders vorteilhafter Weise ist die Nachrüstung eines bestehenden Heizungssystems mit dem erfindungsgemäßen Speicherbehälter problemlos möglich.

Weiterhin erlaubt das Schichtladesystem eine einfache und zuverlässige Einstellung der Temperatur des dem Speicherbehälter entnommenen fluiden Mediums. Die Beherrschung von Drücken, wie sie in Heizungssystemen und Trinkwassersystemen herrschen, ist bei dem erfindungsgemäßen Speicherbehälter dabei unkritisch. Da der erfindungsgemäße Speicherbehälter durch das aufgebrachte Faserverbundmaterial gleichsam doppelwandig ausgebildet ist, stellt die Faserverbundmaterialumwicklung eine Auffangmöglichkeit bei Versagen des Speicherbehälters dar.

Im Übrigen ist darauf hinzuweisen, dass sich ein erfindungsgemäßer Speicherbehälter problemlos wiederverwerten lässt. Der Aufbau des erfindungsgemäßen Speicherbehälters erlaubt ein problemloses Trennen der unterschiedlichen Behälterbestandteile, die dann materialspezifischen Verwertungen zugeführt werden können.

Nachfolgend wird die Erfindung anhand einer lediglich ein Ausführungsbeispiel darstellenden Zeichnung detailliert erläutert. Es zeigen in schematischer Darstellung:
- Fig. 1: einen Querschnitt durch einen erfindungsgemäßen Speicherbehälter,
- Fig. 2: eine perspektivische Aufsicht auf einen Deckel eines erfindungs-gemäßen Speicherbehälters,
- Fig.3: einen Querschnitt in der Zeichenebene des Kopfbereichs des Speicherbehälters gemäß Fig. 1,
- Fig. 4: einen Querschnitt senkrecht zur Zeichenebene des Kopfbereichs des Speicherbehälters gemäß Fig. 1,
- Fig.5: eine perspektivische Unteransicht des Deckels des Speicherbe-hälters gemäß Fig. 1,
- Fig. 6: eine perspektivische Ansicht mehrerer, miteinander verschalteter Speicherbehälter gemäß Fig. 1,
- Fig. 7: eine schematische Darstellung der Funktionsweise der erfindungs-gemäßen Entnahmevorrichtung in einem ersten Betriebsmodus,
- Fig. 8: eine schematische Darstellung der Funktionsweise der erfindungs-gemäßen Entnahmevorrichtung in einem zweiten Betriebsmodus,
- Fig. 9: eine schematische Darstellung der Funktionsweise der erfindungs-gemäßen Entnahmevorrichtung gemäß Fig. 8 mit einem Warm-wasserwärmetauscher,
- Fig. 10: eine schematische Darstellung der Funktionsweise der erfindungsge-mäßen Entnahmevorrichtung gemäß Fig. 8 mit einem Warmwasser-wärmetauscher und einem Heizungswärmetauscher,
- Fig. 11: eine schematische Darstellung der Funktionsweise der erfindungsge-mäßen Entnahmevorrichtung in einem dritten Betriebsmodus.

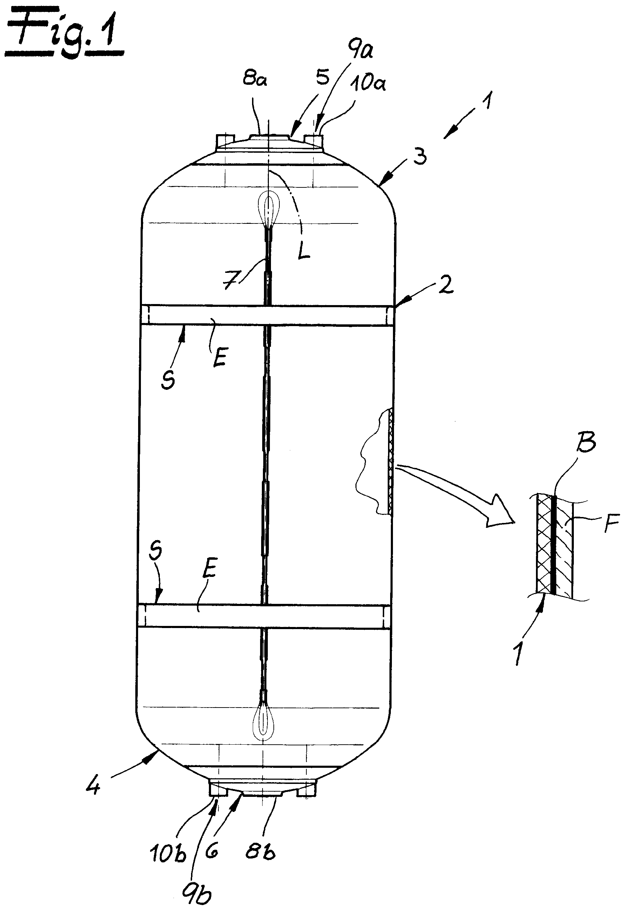

In Fig. 1 ist ein erfindungsgemäßer Speicherbehälter 1 dargestellt, der in dem Ausführungsbeispiel ein Volumen von 500 Litern aufweist. Der Speicherbehälter 1 weist gemäß dem Ausführungsbeispiel einen Mittelabschnitt 2 auf, an den ein kopfseitiger Kugelabschnitt 3 und ein fußseitiger Kugelabschnitt 4 angeformt ist. Eine Montageöffnung in dem kopfseitigen Kugelabschnitt 3 bzw. fußseitigen Kugelabschnitt 4 ist mit einem Deckel 5 bzw. einem Boden 6 verschlossen. Gemäß einer bevorzugten Ausführungsform und Fig. 1 sind in dem Behältermantel 2 Längssicken 7 zur Aufnahme eines nicht dargestellten Thermofühlers eingebracht. Vorzugsweise und gemäß Fig. 1 ist der Mittelabschnitt 2 des Speicherbehälters 1 rotationssymmetrisch ausgebildet, wobei eine Längsachse L der Rotationsachse des rotationssymmetrischen Speicherbehälters 1 entspricht. In Fig. 1 ist weiterhin dargestellt, dass der Speicherbehälter 1 als aufrecht stehender bzw. vertikal aufgerichteter Speicherbehälter 1 ausgebildet ist.

Gemäß Fig. 1 sind in dem Mittelabschnitt 2 zwei Verstärkungssicken S angeordnet, in denen gemäß einer bevorzugten Ausführungsform und dem Ausführungsbeispiel gemäß Fig. 1 jeweils ein Bandagenelement E aufgenommen ist. In dem Ausführungsbeispiel besteht das Bandagenelement aus einem Faserverbundmaterial.

Auf der Oberfläche des Speicherbehälters 1 ist gemäß Fig. 1 eine Barriereschicht B angeordnet. Die Barriereschicht B bedeckt in dem Ausführungsbeispiel die Oberfläche des Speicherbehälters 1 vollständig. Bei der Barriereschicht B handelt es sich nach besonders bevorzugter Ausführungsform um eine Metallschicht bzw. Metallfolie und empfohlenermaßen um eine Aluminiumschicht bzw. um eine Aluminiumfolie. Die Barriereschicht B mag in dem Bereich des kopfseitigen Kugelabschnitts 3 und in dem Bereich des fußseitigen Kugelabschnitts 4 eine Dicke von 100 µm haben und im Bereich des Mittelabschnitts 2 eine Dicke von 50 µm aufweisen. Vorzugsweise und im Ausführungsbeispiel ist die Barriereschicht B unmittelbar und ohne Zwischenschaltung weiterer Schichten auf die Oberfläche des Speicherbehälters 1 aufgebracht. Zweckmäßigerweise wird die Barriereschicht bzw. die bevorzugt eingesetzte Aluminiumfolie auf die Oberfläche des Speicherbehälters 1 aufgewickelt. Grundsätzlich könnte zwischen der Barriereschicht B bzw. der Aluminiumfolie und der Oberfläche des Speicherbehälters 1 auch eine Klebeschicht bzw. Haftvermittlerschicht angeordnet sein.

Weiterhin ist in der Fig. 1 dargestellt, dass auf der Barriereschicht B eine Schicht aus einem Faserverbundmaterial F angeordnet ist. Die Dicke der Schicht aus dem Faserverbundmaterial F beträgt in dem Ausführungsbeispiel 4 mm. Vorzugsweise und im Ausführungsbeispiel ist die Schicht aus dem Faserverbundmaterial F unmittelbar und ohne Zwischenschaltung weiterer Schichten auf der Barriereschicht B angeordnet. An die Schicht aus dem Faserverbundmaterial F schließen im Bereich der Verstärkungssicken S die Bandagenelemente E an, die - wie oben bereits ausgeführt - vorzugsweise ebenfalls aus einem Faserverbundmaterial bestehen. Zweckmäßigerweise und im Ausführungsbeispiel sind die Bandagenelemente aus dem Faserverbundmaterial F mit der Schicht aus dem Faserverbundmaterial F verbunden.

Der Deckel 5 und der Boden 6 weisen jeweils eine zentrierte Erhebung 8a, 8b sowie zwei äquidistant zur Längsachse L angeordnete Durchgangsbohrungen 9a, 9b auf. Die Durchgangsbohrungen 9a, 9b liegen einander diametral gegenüber. Gemäß Fig. 1 sind die Durchgangsbohrungen 9a, 9b jeweils von einem Kragen 10a, 10b umgeben, wobei Stirnflächen der Erhebung 8a, 8b und der Kragen 10a, 10b miteinander fluchten.

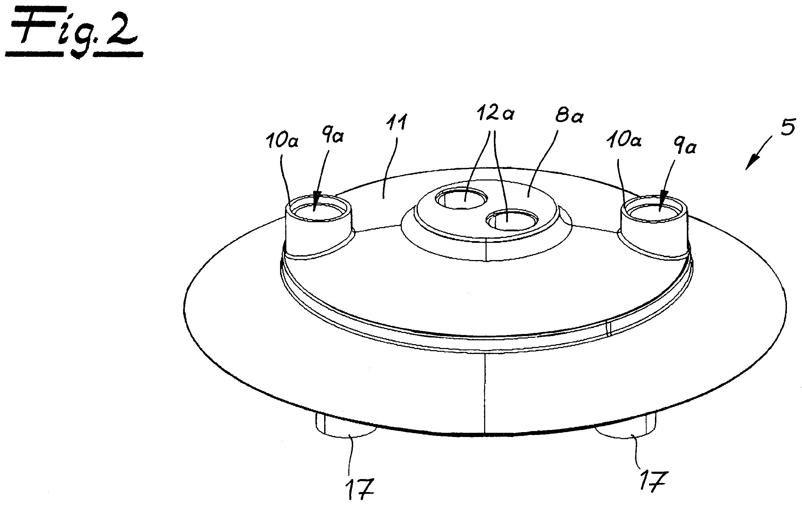

Der besseren Übersicht halber sind in den Fig. 2 bis 11 die Barriereschicht B, die Schicht aus dem Faserverbundmaterial F sowie die Verstärkungssicken S nicht dargestellt.

In Fig. 2 ist ein erfindungsgemäßer Deckel 5 dargestellt, der in dem Ausführungsbeispiel mit dem Boden 6 identisch ist. In Fig. 2 ist gezeigt, dass die Erhöhung 8a und die Kragen 10a im Bereich eines kalottenförmigen Aufsatzes 11 auf dem Deckel 5 angeordnet sind. Weiterhin ist in Fig. 2 erkennbar, dass in der Erhebung 8a zwei Anschlusspunkte 12a angeordnet sind.

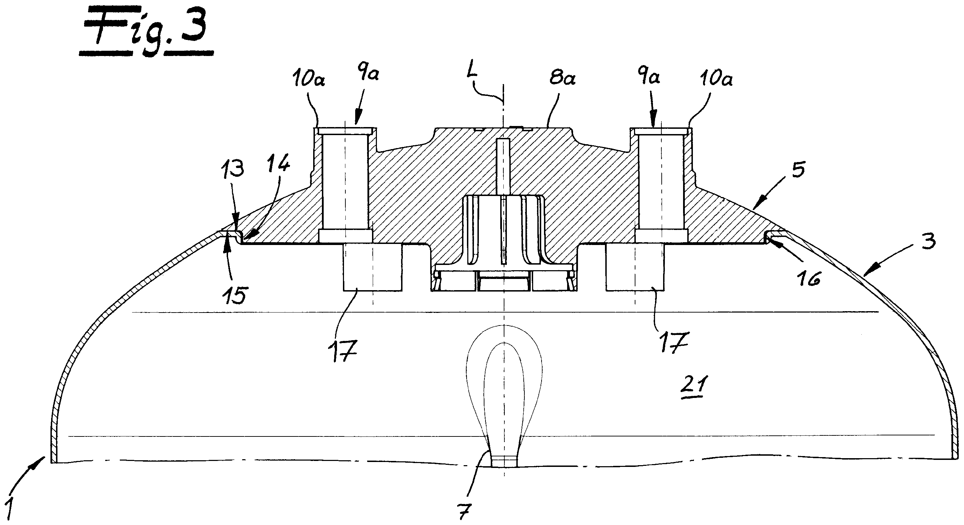

In Fig. 3 ist der auf die Zugangsöffnung des kopfseitigen Kugelabschnitts 3 aufgesetzte Deckel 5 dargestellt. Der kopfseitige Kugelabschnitt 3 weist eine die Zugangsöffnung umlaufende, horizontal bzw. quer zur Längsachse L orientierte Auflagefläche 13 auf, an die eine öffnungsseitige, vertikale Anlagefläche 14 angeschlossen ist. Der Deckel 5 liegt mit einer ringförmigen Lagerfläche 15 auf der Auflagefläche 13 auf. Die ringförmige Lagerfläche 15 wird in radialer Richtung innenseitig von einer vertikalen Dichtfläche 16 begrenzt, welche vertikale Dichtfläche 16 gemäß Fig. 3 an der vertikalen Anlagefläche 14 anliegt. Eine vertikale Orientierung der Anlagefläche 14 und der Dichtfläche 16 meint, dass die Anlagefläche 14 und die Dichtfläche 16 senkrecht zu einem Aufstelluntergrund bzw. parallel zur Längsachse L orientiert sind.

Weiterhin ist in Fig. 3 dargestellt, dass die Durchgangsbohrungen 9a an einer Innenseite bzw. an einer innenraumseitigen Oberfläche des Deckels 5 sowie an Stirnflächen der Kragen 10a umlaufende Erweiterungen aufweisen.

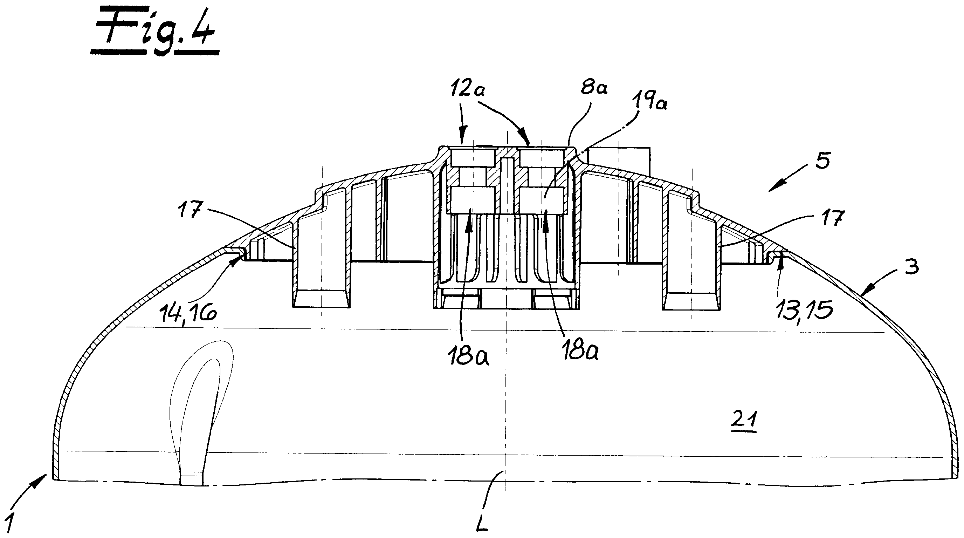

In Fig. 4 ist dargestellt, dass an den Deckel 5 als Stützhülsen 17 ausgebildete Fixierungsmittel angeschlossen sind. In den Stützhülsen 17 sind nicht dargestellte Stützelemente arretierbar, mit denen eine Verbindung des Deckels 5 mit dem Boden 6 möglich ist und mit denen ein Wärmetauscher haltbar ist. Die an den Deckel 5 angeschlossenen Stützhülsen 17 liegen einander in Bezug auf die Längsachse L diametral gegenüber.

Vorzugsweise und gemäß dem Ausführungsbeispiel gemäß Fig. 3 und 4 ist die Erhebung 8a in Bezug auf die Längsachse L zentriert auf dem Deckel 5 angeordnet. Die beiden Anschlusspunkte 12a münden in von einander getrennte Strömungskanäle 18a, in denen jeweils ein mit einer nicht dargestellten Verdrehsicherung ausgestatteter Gewindeeinsatz 19a eingesetzt ist. Außenseitig weisen die Strömungskanäle 18a Aufweitungen zur Aufnahme von Anschlussmitteln auf.

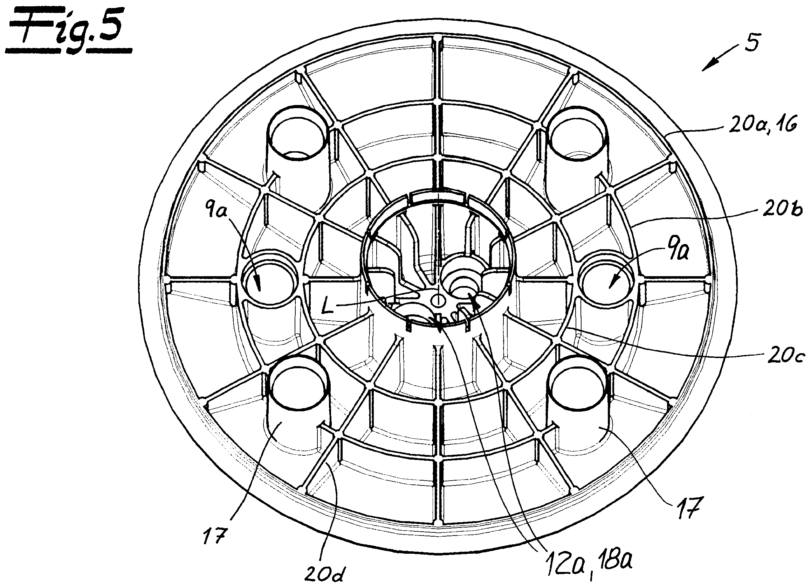

In Fig. 5 ist erkennbar, dass der Deckel 5 innenseitig Verstärkungsrippen 20a, 20b, 20c aufweist, wobei drei konzentrisch verlaufende, ringförmige Verstärkungsrippen 20a, 20b, 20c vorgesehen sind. Weiterhin ist in Fig. 5 gezeigt, dass der Deckel innenseitig zwölf geradlinige Verstärkungsrippen 20d aufweist, die sternförmig um die Längsachse L angeordnet sind. Der Winkel zwischen zwei geradlinigen Verstärkungsrippen 20d beträgt in dem Ausführungsbeispiel 30°. Vorzugsweise und gemäß dem Ausführungsbeispiel sind vier Stützhülsen 17 an der Innenseite des Deckels 5 angeschlossen, die jeweils integraler Bestandteil der mittleren ringförmigen Verstärkungsrippe 20b sind. Die Durchgangsbohrungen 9a sind vorzugsweise derart in den Aufsatz 11 des Deckels 5 eingebracht, dass die Durchgangsbohrungen 9a zwischen der inneren ringförmigen Verstärkungsrippe 20c und der mittleren Verstärkungsrippe 20b angeordnet sind. Weiterhin ist in den Fig. 3, 4 und 5 dargestellt, dass die vertikale Dichtfläche 16 von der äußeren, ringförmigen Verstärkungsrippe 20a gebildet wird.

In den Fig. 1 bis 5 ist nicht dargestellt, dass in dem Innenraum 21 des Speicherbehälters 1 ein Warmwasserwärmetauscher und ein Heizungswärmetauscher angeordnet ist.

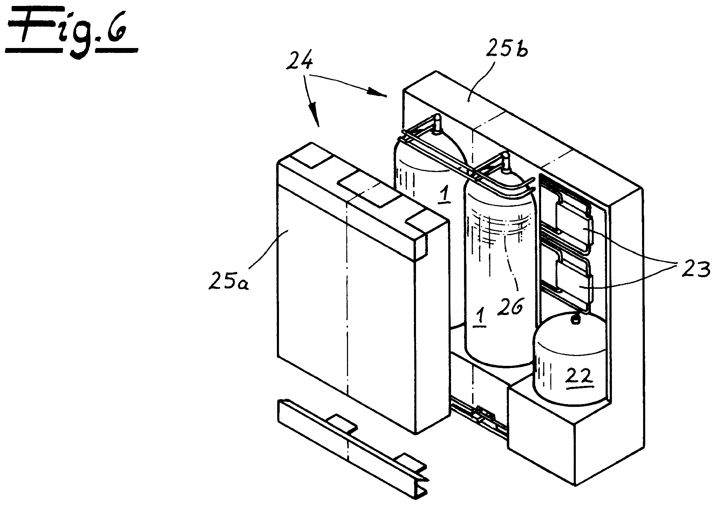

In Fig. 6 ist ein Aggregat dargestellt, das eine Wärmequelle 22, eine Steuereinheit 23 sowie zwei Speicherbehälter 1 aufweist. Die Speicherbehälter 1 sind jeweils in einer Verschalung 24 angeordnet, die aus zwei Halbschalen 25a, 25b besteht. In dem Ausführungsbeispiel gemäß Fig. 6 sind die Speicherbehälter 1 jeweils mit einem Warmwasserwärmetauscher 26 ausgestattet. Den Speicherbehältern 1 ist unabhängig voneinander ein von der Wärmequelle 22 erwärmtes flluides Medium zuführbar. Ebenso kann den Speicherbehältern 1 gemäß Fig. 6 das erwärmte fluide Medium unabhängig voneinander entnommen werden.

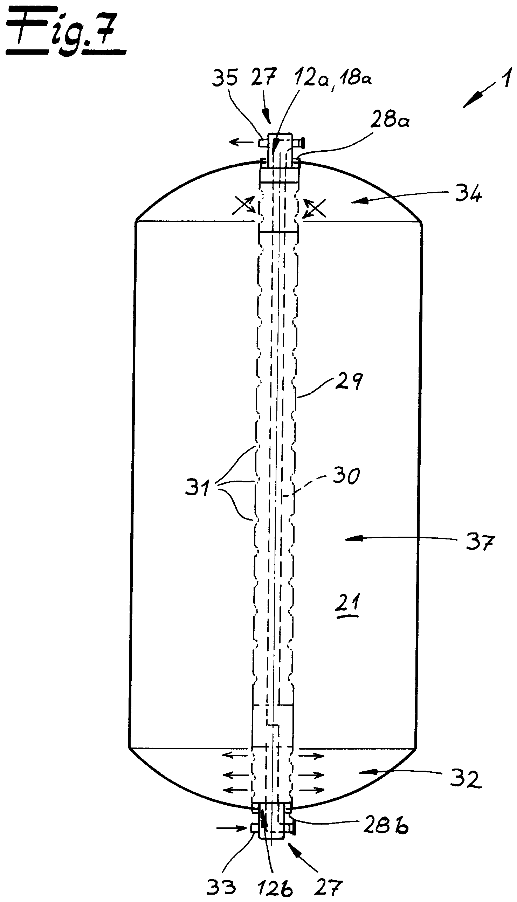

In Fig. 7 ist ein vereinfachter Speicherbehälter 1 dargestellt, in dem eine Entnahmevorrichtung 27 angeordnet ist. Die Entnahmevorrichtung 27 ist an einen deckelseitigen Fixierungsflansch 28a und an einen bodenseitigen Fixierungsflansch 28b angeschlossen. Gemäß Fig. 7 ist die Entnahmevorrichtung 27 als Doppelrohr mit einem Mantelrohr 29 und einem Innenrohr 30 ausgebildet. Das Mantelrohr weist Öffnungen 31 auf, durch die ein in dem Innenraum 21 bevorratetes, erwärmtes, fluides Medium in das Mantelrohr 29 einströmen bzw. aus dem Mantelrohr 29 in den Innenraum 21 strömen kann.

Das Mantelrohr 29 weist einen Fußabschnitt 32 auf, der gemäß Fig. 7 fluidleitend mit einer fußseitigen Zulaufleitung 33 verbunden ist. Die fußseitige Zulaufleitung 33 ist dazu an einen der beiden fußseitigen Anschlusspunkte 12b angeschlossen. Der andere Anschlusspunkt 12b ist in dem Ausführungsbeispiel gemäß Fig. 7 verschlossen. Durch die fußseitige Zulaufleitung 33 kann gemäß Fig. 7 von einer nicht dargestellten Wärmequelle erwärmtes fluides Medium in den Innenraum 21 des Speicherbehälters 1 gefördert werden, wobei das erwärmte, fluide Medium aus Öffnungen 31 in dem Fußabschnitt 32 in den Innenraum 21 des Speicherbehälters 1 austritt. Deckelseitig weist das Mantelrohr 29 einen Kopfabschnitt 34 auf, welcher Kopfabschnitt 34 gemäß Fig. 7 fluidleitend mit einer kopfseitigen Entnahmeleitung 35 verbunden ist. Die kopfseitige Entnahmeleitung 35 ist an einen der Anschlusspunkte 12a des Deckels 5 angeschlossen, wobei der andere Anschlusspunkt 12a des Deckels 5 verschlossen ist. Das erwärmte, fluide Medium strömt gemäß Fig. 7 durch Öffnungen 31 in dem Kopfabschnitt 34 und durch einen der Strömungskanäle 18a zu der kopfseitigen Entnahmeleitung 35. Von dort kann das erwärmte fluide Medium einem nicht dargestellten Verbraucher zugeführt werden. In einer weiteren, nicht dargestellten Ausführungsform sind der Fußabschnitt 32 und der Kopfabschnitt 34 der Entnahmevorrichtung mechanisch nicht miteinander verbunden. In Fig. 7 ist ein Betriebsmodus dargestellt, bei dem der Speicherbehälter 1 als Pufferspeicher zur Bevorratung größerer Mengen des erwärmten, fluiden Mediums eingesetzt ist. Der Innenraum 21 ist vollständig mit dem fluiden Medium ausgefüllt.

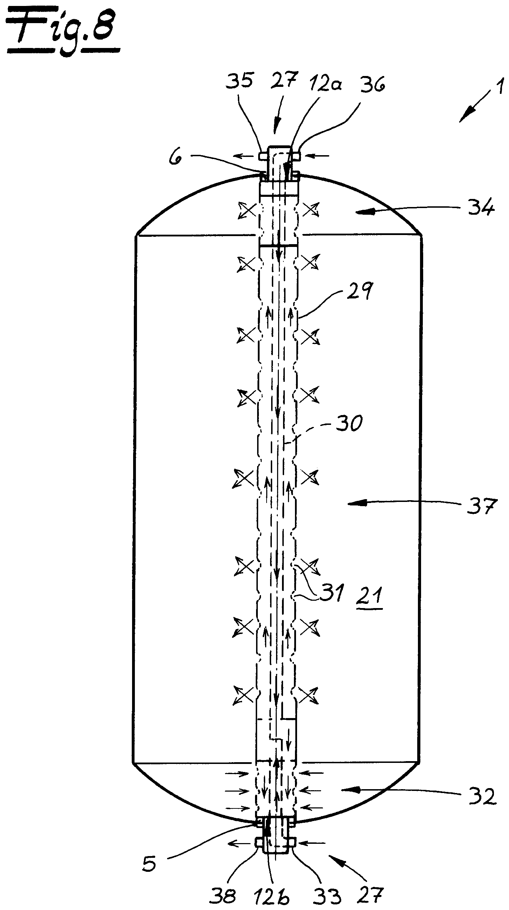

Bei dem Betriebsmodus gemäß Fig. 8 wird dem Speicherbehälter 1 kopfseitig bzw. deckelseitig über die Entnahmeleitung 35 erwärmtes, fluides Medium entnommen und einem nicht dargestellten Verbraucher zugeführt. Die kopfseitige Entnahmeleitung 35 ist über einen Anschlusspunkt 12a mit dem Kopfabschnitt 34 des Mantelrohrs 29 verbunden. An den anderen Anschlusspunkt 12a ist eine Zulaufleitung 36 angeschlossen, die fluidleitend mit dem Innenrohr 30 der Entnahmevorrichtung 27 verbunden ist. Durch die Zulaufleitung 36 wird abgekühltes, fluides Medium von einem Verbraucher zurück zu dem Speicherbehälter 1 gefördert. Das Innenrohr 30 durchläuft einen Verbindungsabschnitt 37 des Mantelrohrs 29 und ist fußseitig bzw. bodenseitig fluidleitend mit dem Fußabschnitt 32 verbunden. Der Fußabschnitt 32 ist gemäß Fig. 8 über einen Anschlusspunkt 12b mit einer fußseitigen Rücklaufleitung 38 verbunden. Über die fußseitige Rücklaufleitung 38 wird abgekühltes, fluides Medium zu einer Wärmequelle zurückgefördert, die in Fig. 8 nicht dargestellt ist. An den anderen Anschlusspunkt 12b des Bodens 6 ist eine fußseitige Zulaufleitung 33 angeschlossen, die fluidleitend mit dem Verbindungsabschnitt 37 und dem Kopfabschnitt 34 des Mantelrohrs 29 verbunden ist. Durch die fußseitige Zulaufleitung 33 ist dem Innenraum 21 des Speicherbehälters 1 erwärmtes fluides Medium zuführbar, welches von der nicht dargestellten Wärmequelle erwärmbar ist.

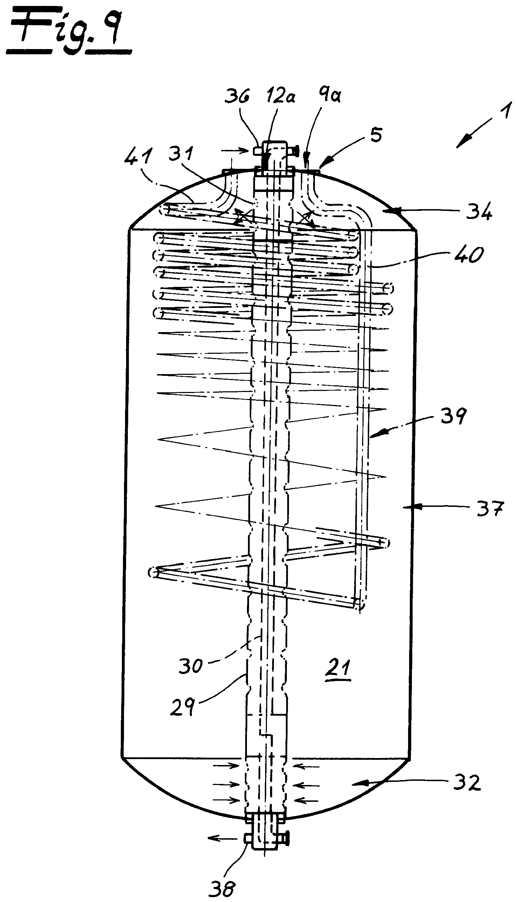

In Fig. 9 ist ergänzend dargestellt, dass in dem Innenraum 21 ein Warmwasserwärmetauscher 39 angeordnet ist. In dem Ausführungsbeispiel gemäß Fig. 9 wird in einen Vorlauf 40 des Warmwasserwärmetauschers kaltes Trinkwasser bzw. Brauchwasser eingeleitet, das nach dem Durchströmen des Warmwasserwärmetauschers als erwärmtes Trinkwasser bzw. Brauchwasser durch einen Rücklauf 41 einem nicht dargestellten Verbraucher zuführbar ist. Vorzugsweise und gemäß Fig. 9 ist der Warmwasserwärmetauscher 39 im Kopfbereich des Speicherbehälters 1 angeordnet. In dem Ausführungsbeispiel ist der Warmwasserwärmetauscher 39 als wendeiförmiges Edelstahlwellrohr ausgebildet.

Der Vorlauf 40 und der Rücklauf 41 sind in dem Ausführungsbeispiel gemäß Fig. 9 durch die Durchgangsbohrungen 9a in dem Deckel 5 geführt. Um zu gewährleisten, dass das Trinkwasser, das durch den Warmwasserwärmetauscher 39 erwärmt wird, eine möglichst hohe Temperatur aufweist, wird bei dem Speicherbehälter 1 gemäß Fig. 9 das erwärmte fluide Medium über einen Anschlusspunkt 12a im Deckel 5 in den Innenraum 21 eingespeist, wobei das erwärmte fluide Medium aus Öffnungen 31 im Kopfabschnitt 34 des Mantelrohrs 29 in den Innenraum 21 austritt. Der andere Anschlusspunkt 12a im Deckel 5 ist bei dieser Ausführungsform gemäß Fig. 9 verschlossen. Fußseitig ist die Rücklaufleitung 38 mit dem Fußabschnitt 32 verbunden, so dass das aufgrund der höheren Dichte gegenüber dem erwärmten fluiden Medium nach unten sinkende, kalte fluide Medium durch den Fußabschnitt 32 zu der Rücklaufleitung 38 strömt und dann einem nicht dargestellten Wärmeerzeuger zugeführt werden kann. Das erwärmte, fluide Medium wird dann über die kopfseitige Zulaufleitung 36 in den Innenraum 21 gefördert.

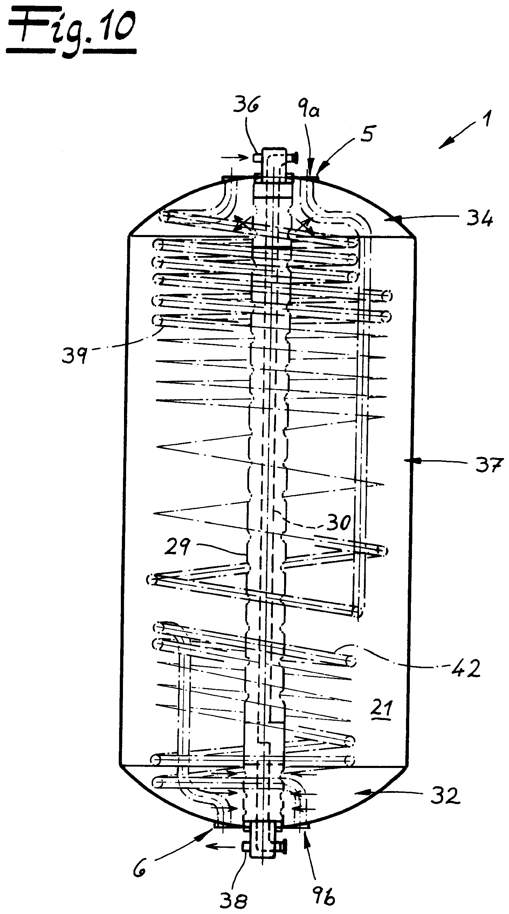

Der Speicherbehälter 1 gemäß Fig. 10 entspricht im Wesentlichen dem Speicherbehälter gemäß Fig. 9 wobei zusätzlich ein Heizungswärmetauscher 42 in dem Innenraum 21 des Speicherbehälters 1 angeordnet ist. Durch den Heizungswärmetauscher, der in dem Ausführungsbeispiel gemäß Fig. 10 bodenseitig in dem Speicherbehälter 1 angeordnet ist, ist in den Speicherbehälter 1 Wärme aus einer nicht dargestellten Solarenergieeinheit einbringbar. Ebenfalls nicht dargestellt ist, dass ein Wärmeträgermedium, das von einer Solarenergieeinheit zu dem Heizungswärmetauscher 42 geführt wird, verschieden ist von dem in dem Innenraum 21 vorrätig gehaltenen, fluiden Medium.

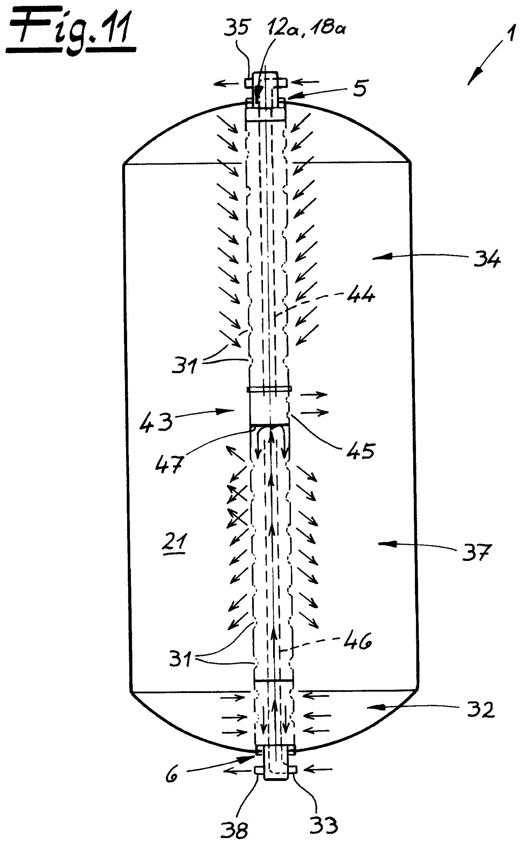

Ein dritter Betriebsmodus des erfindungsgemäßen Speicherbehälters 1 ist in Fig. 11 dargestellt. Über einen deckelseitigen Anschlusspunkt 12a ist dem Speicherbehälter 1 durch die Entnahmeleitung 35 erwärmtes, fluides Medium entnehmbar, das einem nicht dargestellten Verbraucher zuführbar ist. Das erwärmte, fluide Medium strömt durch Öffnungen 31 in dem Kopfabschnitt 34 und durch einen Strömungskanal 18a zu der Entnahmeleitung 35. Durch den anderen Strömungskanal 18a im Deckel 5 wird abgekühltes, fluides Medium über ein oberes Innenrohr 44 in den Innenraum 21 zurückgeführt, wobei das obere Innenrohr 44 in dem Kopfabschnitt 34 verläuft und unterhalb des Kopfabschnitts 34 in einen Kopplungsabschnitt 43 mündet. Der Kopplungsabschnitt 43 verfügt über Austrittsöffnungen 45, durch die das kalte, fluide Medium in den Innenraum 21 strömt. An ein bodenseitiges Ende des Kopplungsabschnitts schließt den Verbindungsabschnitt 37 an, dem durch die fußseitige Zulaufleitung 33 von einer nicht dargestellten Wärmequelle erwärmtes fluides Medium zugeführt wird. In dem Verbindungsabschnitt 37 ist ein unteres Innenrohr 46 angeordnet, in das das erwärmte fluide Medium in Richtung des Kopplungsabschnitts 43 geführt und an einer Trennwand 47, die zwischen dem Verbindungsabschnitt 37 und dem Kopplungsabschnitt 43 angeordnet ist, umgelenkt wird, so dass es durch Öffnungen 31 in dem Verbindungsabschnitt in den Innenraum 21 strömt. Der Kopplungsabschnitt 43 ist nicht mit dem Verbindungsabschnitt 37 und nicht mit dem Fußabschnitt 32 fluidleitend verbunden.

Bodenseitig schließt an den Verbindungsabschnitt 37 der Fußabschnitt 32 an, durch welchen Fußabschnitt 32 das abgekühlte, fluide Medium zu der fußseitigen Rücklaufleitung 38 strömt. Von der fußseitigen Rücklaufleitung 38 ist das abgekühlte fluide Medium einer Wärmequelle bzw. einem Wärmeerzeuger zuführbar.

Das aus dem oberen Innenrohr 44 austretende, und im Verbraucher abgekühlte, fluide Medium sinkt aufgrund der gegenüber dem erwärmten, fluiden Medium höheren Dichte in Richtung des Bodens 6 und wird dann über den Fußabschnitt 32 aus dem Innenraum 21 entfernt. Das aus dem Innenraum 21 austretende kalte, fluide Medium wird durch ein identisches Volumen des erwärmten fluiden Mediums ersetzt, das gemäß Fig. 11 dem Innenraum 21 durch die fußseitige Zulaufleitung 33 zugeführt wird.

In der Fig. 11 ist nicht dargestellt, dass im Kopfbereich des Innenraums 21 ein Warmwasserwärmetauscher 39 und im Fußbereich des Innenraums 21 ein Heizungswärmetauscher 42 angeordnet ist.

## Patentansprüche

1. Speicherbehälter aus Kunststoff für ein fluides Medium, insbesondere für erwärmtes Heizungswasser oder erwärmtes Trinkwasser, wobei mindestens eine Montageöffnung des Speicherbehälters (1) mit einem Bauteil verschlossen ist, wobei das Bauteil als separates Bauteil ausgebildet und fluiddicht an den Speicherbehälter (1) angeschlossen ist, wobei der Speicherbehälter (1) eine Barriereschicht B aufweist, welche Barriereschicht B ein Diffundieren korrosiver Gase in den Innenraum (21) des Speicherbehälters (1) verhindert bzw. im Wesentlichen verhindert, wobei der Speicherbehälter (1) zumindest teilweise außenseitig mit einem Faserverbundmaterial F verstärkt bzw. umwickelt ist, wobei in einem Innenraum (21) des Speicherbehälters (1) eine Entnahmevorrichtung (27) zum Einspeisen und/oder Entnehmen des fluiden Mediums angeordnet ist, wobei in dem Bauteil zumindest ein Anschlusselement angeordnet ist, an das die Entnahmevorrichtung (27) derart angeschlossen ist, dass das fluide Medium in den Innenraum (21) einbringbar bzw. aus dem Innenraum (21) entnehmbar ist.

2. Speicherbehälter nach Anspruch 1, wobei das Bauteil als Deckel (5) für eine zu verschließende kopfseitige Montageöffnung des Speicherbehälters (1) und/oder als Boden (6) für eine zu verschließende fußseitige Montageöffnung des Speicherbehälters (1) ausgebildet ist.

3. Speicherbehälter nach einem der Ansprüche 1 oder 2, wobei der Speicherbehälter (1) einen zylinderförmig ausgebildeten Mittelabschnitt (2) aufweist, der einen kreisförmigen oder ovalen Querschnitt aufweist.

4. Speicherbehälter nach einem der Ansprüche 1 bis 3, wobei die Barriereschicht B zumindest bereichsweise zwischen dem Speicherbehälter (1) und dem Faserverbundmaterial (F) angeordnet ist.

5. Speicherbehälter nach einem der Ansprüche 1 bis 4, wobei die Barriereschicht B zumindest eine Schicht aus der Gruppe "Metallschicht, Kunststoffschicht, Lackschicht" ist.

6. Speicherbehälter nach Anspruch 5, wobei die Metallschicht eine Dicke von 40 bis 140 µm aufweist.

7. Speicherbehälter nach einem der Ansprüche 5 oder 6, wobei die Metallschicht im Bereich des Deckels (5) und/oder des Bodens (6) eine Dicke von 80 bis 120 µm und im Bereich des Mittelabschnitts (2) eine Dicke von 40 bis 60 µm aufweist.

8. Speicherbehälter nach einem der Ansprüche 1 bis 7, wobei eine Schicht aus dem Faserverbundmaterial F eine Dicke von 2 bis 10 mm aufweist.

9. Speicherbehälter nach einem der Ansprüche 1 bis 8, wobei das Faserverbundmaterial F zumindest 10 bis 50 Gew.-% eines thermoplastischen Kunststoffs und zumindest 50 bis 90 Gew.-% einer Faserart enthält und wobei als Faserart vorzugsweise Glasfasern in dem Faserverbundmaterial F enthalten sind.

10. Speicherbehälter nach einem der Ansprüche 1 bis 9, wobei in dem Innenraum (21) des Speicherbehälters (1) ein Warmwasserwärmetauscher (39) zum Erwärmen von Trinkwasser angeordnet ist, wobei der Warmwasserwärmetauscher (39) durch ein Stützelement gehalten wird.

11. Speicherbehälter nach einem der Ansprüche 1 bis 10, wobei in dem Innenraum (21) ein Unterstützungswärmetauscher (42) (Heizungswärmetauscher) angeordnet ist, durch den Wärme auf das in dem Innenraum (21) befindliche fluide Medium übertragbar ist.

12. Speicherbehälter nach einem der Ansprüche 10 oder 11, wobei in dem Deckel (5) und/oder dem Boden (6) ein und vorzugsweise zwei Durchgangsbohrungen (9a, 9b) angeordnet sind, durch welche Durchgangsbohrungen (9a, 9b) ein Zulauf (40) und/oder ein Rücklauf (41) des im Innenraum (21) angeordneten Warmwasserwärmetauschers (39) und/oder Unterstützungswärmetauschers (42) führbar sind.

13. Speicherbehälter nach einem der Ansprüche 10 bis 12, wobei in dem Innenraum (21) zumindest ein Leitmittel angeordnet ist, mit dem vorzugsweise vom Heizungswärmetauscher (42) erwärmtes fluides Medium zu der Entnahmevorrichtung (27) lenkbar ist.

14. Verfahren zur Herstellung eines Speicherbehälters (1), insbesondere nach einem der Ansprüche 1 bis 13, wobei der Speicherbehälter (1) mit einer verschlossenen kopfseitigen Stirnseite und einer verschlossenen fußseitigen Stirnseite vorzugsweise durch Blasformen bereitgestellt wird, wobei in zumindest eine Stirnseite eine Montageöffnung eingebracht wird, wobei die Montageöffnung mit einem Bauteil verschlossen wird, wobei zumindest bereichsweise außenseitig auf dem Speicherbehälter eine Barriereschicht angeordnet wird, welche Barriereschicht ein Diffundieren korrosiver Gase in den Speicherbehälter verhindert bzw. im Wesentlichen verhindert, wobei der Speicherbehälter (1) zumindest bereichsweise mit einem Faserverbundmaterial F verstärkt bzw. umwickelt wird, wobei das Bauteil mit einem Anschlusselement ausgestattet wird und wobei an das Anschlusselement eine Entnahmevorrichtung (27) zum Einbringen des fluiden Mediums in den Innenraum (21) und zum Entnehmen des fluiden Mediums aus dem Innenraum (21) des Speicherbehälters (1) angeschlossen wird.

## Claims

1. Storage container made of plastic for a fluid medium, in particular for heated heating water or heated drinking water, wherein at least one mounting opening of the storage container (1) is closed by a component, wherein the component is configured as a separate component and is connected in a fluid-tight manner to the storage container (1), wherein the storage container (1) comprises a barrier layer B, which barrier layer B prevents and/or substantially prevents a diffusion of corrosive gases into the interior (21) of the storage container (1), wherein the storage container (1) is at least partially reinforced and/or wrapped with a fibre composite material F on the outer face, wherein a discharge device (27) for supplying and/or discharging the fluid medium is arranged in an interior (21) of the storage container (1), wherein at least one connection element is arranged in the component, the discharge device (27) being connected to said connection element such that the fluid medium is able to be introduced into the interior (21) and/or is able to be discharged from the interior (21).

2. Storage container according to Claim 1, wherein the component is configured as a lid (5) for a mounting opening of the storage container (1) to be closed at the top, and/or as a base (6) for a mounting opening of the storage container (1) to be closed at the bottom.

3. Storage container according to one of Claims 1 or 2, wherein the storage container (1) comprises a central portion (2) which is of cylindrical configuration and which has a circular or oval cross section.

4. Storage container according to one of Claims 1 to 3, wherein the barrier layer B is arranged at least partially between the storage container (1) and the fibre composite material (F).

5. Storage container according to one of Claims 1 to 4, wherein the barrier layer B is at least a layer from the group "metal layer, plastics layer, paint layer".

6. Storage container according to Claim 5, wherein the metal layer has a thickness of 40 to 140 µm.

7. Storage container according to one of claims 5 or 6, wherein the metal layer in the region of the lid (5) and/or the base (6) has a thickness of 80 to 120 µm and in the region of the central portion (2) has a thickness of 40 to 60 µm.

8. Storage container according to one of Claims 1 to 7, wherein a layer made of the fibre composite material F has a thickness of 2 to 10 mm.

9. Storage container according to one of Claims 1 to 8, wherein the fibre composite material F contains at least 10 to 50% by weight of a thermoplastic material and at least 50 to 90% by weight of a type of fibre and wherein glass fibres are preferably contained as a type of fibre in the fibre composite material F.

10. Storage container according to one of Claims 1 to 9, wherein a hot water heat exchanger (39) for heating drinking water is arranged in the interior (21) of the storage container (1), wherein the hot water heat exchanger (39) is retained by a support element.

11. Storage container according to one of Claims 1 to 10, wherein an auxiliary heat exchanger (42) (heating heat exchanger) is arranged in the interior (21), heat being able to be transmitted through said heat exchanger to the fluid medium located in the interior (21).

12. Storage container according to one of Claims 10 or 11, wherein one and preferably two through-bores (9a, 9b) are arranged in the lid (5) and/or the base (6), a supply (40) and/or a return (41) of the hot water heat exchanger (39) and/or auxiliary heat exchanger (42) arranged in the interior (21) being able to be passed through said through-bores (9a, 9b).

13. Storage container according to one of Claims 10 to 12, wherein at least one guide means is arranged in the interior (21), fluid medium heated by the heating heat exchanger (42) preferably being able to be guided thereby to the discharge device (27).

14. Method for producing a storage container (1), in particular according to one of Claims 1 to 13, wherein the storage container (1) is provided with a closed front face at the top and a closed front face at the bottom, preferably by blow-moulding, wherein a mounting opening is incorporated into at least one front face, wherein the mounting opening is closed by a component, wherein a barrier layer is arranged at least partially on the outer face of the storage container, which barrier layer prevents and/or substantially prevents a diffusion of corrosive gases into the storage container, wherein the storage container (1) is at least partially reinforced and/or wrapped with a fibre composite material F, wherein the component is provided with a connection element, and wherein a discharge device (27) for introducing the fluid medium into the interior (21) and for removing the fluid medium from the interior (21) of the storage container (1) is connected to the connection element.

## Revendications

1. Récipient de stockage en matière fluidique pour un milieu fluidique, en particulier pour de l'eau de chauffage réchauffée ou de l'eau potable réchauffée, dans lequel au moins une ouverture de montage du récipient de stockage (1) est fermée avec une pièce, dans lequel la pièce est conçue en tant que pièce séparée et est raccordée en étanchéité fluidique sur le récipient de stockage (1), dans lequel le récipient de stockage (1) présente une couche-barrière B, laquelle couche barrière B empêche, respectivement empêche principalement, une diffusion de gaz corrosifs dans l'intérieur (21) du récipient de stockage (1), dans lequel le récipient de stockage (1) est renforcé, respectivement entouré au moins partiellement d'un matériau de fibres composites (F) sur l'extérieur, dans lequel dans un intérieur (21) du récipient de stockage (1), il est prévu un dispositif de prélèvement (27) pour alimenter et/ou prélever du milieu fluidique, sachant que dans la pièce, au moins un dispositif de connexion est disposé sur lequel le dispositif de prélèvement (27) est raccordé de telle façon que le milieu fluidique peut être amené dans l'intérieur (21), respectivement, peut être sorti de l'intérieur (21).

2. Récipient de stockage selon la revendication 1, dans lequel la pièce est conçue en tant que couvercle (5) pour une ouverture de montage côté tête à refermer du récipient de stockage (1) et/ou en tant que fond (6) pour une ouverture de montage côté base à refermer du récipient de stockage (1).

3. Récipient de stockage selon la revendication 1 ou 2, dans lequel le récipient de stockage (1) présente un tronçon médian (2) de forme cylindrique qui présente une section circulaire ou ovale.

4. Récipient de stockage selon l'une des revendications 1 à 3, dans lequel la couche-barrière B est disposée au moins par tronçons entre le récipient de stockage (1) et le matériau de fibres composites (F).

5. Récipient de stockage selon l'une des revendications 1 à 4, dans lequel la couche-barrière B est au moins une couche du groupe « couche métallique, couche plastique, couche de vernis ».

6. Récipient de stockage selon la revendication 5, dans lequel la couche métallique présente une épaisseur de 40 à 140 µm.

7. Récipient de stockage selon l'une des revendications 5 ou 6, dans lequel la couche métallique présente au niveau du couvercle (5) et/ou du fond (6), une épaisseur de 80 à 120 µm et au niveau du tronçon médian (2), une épaisseur de 40 à 60 µm.

8. Récipient de stockage selon l'une des revendications 1 à 7, dans lequel une couche du matériau de fibres composites (F) présente une épaisseur de 2 à 10 mm.

9. Récipient de stockage selon l'une des revendications 1 à 8, dans lequel le matériau de fibres composites (F) contient au moins 10 à 50 % en poids d'un plastique thermoplastique et au moins 50 à 90 % en poids d'un type de fibre, et dans lequel des fibres de verre sont de préférence contenues dans le matériau de fibres composites (F) en tant que type de fibre.

10. Récipient de stockage selon l'une des revendications 1 à 9, dans lequel un échangeur de chaleur à eau chaude (39) est disposé dans l'intérieur (21) du récipient de stockage (1), dans lequel l'échangeur de chaleur à eau chaude (39) est maintenu par un élément de soutien.

11. Récipient de stockage selon l'une des revendications 1 à 10, dans lequel un échangeur de chaleur de soutien (42) (échangeur de chaleur de chauffage) est disposé dans l'espace (21), à travers lequel de la chaleur peut être transmise au milieu fluidique se trouvant dans l'intérieur (21).

12. Récipient de stockage selon l'une des revendications 10 ou 11, dans lequel un et de préférence deux perçages de passage (9a, 9b) sont disposés dans le couvercle (5) et/ou le fond (6), à travers lesquels perçages de passage (9a, 9b), une arrivée (40) et/ou un retour (41) de l'échangeur de chaleur à eau chaude (39) et/ou de l'échangeur de chaleur de soutien (42) se trouvant dans l'intérieur (21), peuvent être guidés.

13. Récipient de stockage selon l'une des revendications 10 à 12, dans lequel au moins un milieu conducteur est disposé dans l'intérieur (21), avec lequel du milieu fluidique réchauffé par l'échangeur de chaleur de chauffage (42) peut être dirigé de préférence vers le dispositif de prélèvement (27).

14. Procédé de fabrication d'un récipient de stockage (1), en particulier selon l'une des revendications 1 à 13, dans lequel le récipient de stockage (1) est préparé avec une face avant côté tête fermée et une face avant côté base fermée par formage par soufflage, dans lequel une ouverture de montage est pratiquée dans au moins une face avant, dans lequel l'ouverture de montage est raccordée à une pièce, dans lequel une couche-barrière est disposée au moins par tronçons sur le récipient de stockage sur l'extérieur, laquelle couche-barrière empêche, respectivement empêche principalement, une diffusion de gaz corrosifs dans le récipient de stockage, dans lequel le récipient de stockage (1) est renforcé, respectivement entouré au moins par tronçons d'un matériau de fibres composites (F), dans lequel la pièce est dotée d'un élément de raccordement, et dans lequel un dispositif de prélèvement (27) est raccordé à l'élément de raccordement pour alimenter du milieu fluidique dans l'intérieur (21) et/ou prélever du milieu fluidique hors de l'intérieur (21) du récipient de stockage (1).
